# FASCICULE DE BREVET EUROPEEN

(11) **EP 1 250 537 B1**
(45) Date de publication et mention de la délivrance du brevet: **01.09.2004**
(21) Numéro de dépôt: 01901186.5
(22) Date de dépôt: 22.01.2001
(51) Int. Cl.: F16F 1/38

(54) **DISPOSITIF ET PROCEDE D'APPLICATION D'UNE PRECONTRAINTE DE COMPRESSION A UNE ARTICULATION ELASTIQUE**
VORRICHTUNG UND VERFAHREN ZUM AUFBRINGEN EINER VORSPANNUNG AN EINEM ELASTISCHEN GELENK
DEVICE AND METHOD FOR APPLYING COMPRESSIVE PRESTRESS TO AN ELASTIC ARTICULATION

(30) Priorité: 27.01.2000 FR 0001080
(43) Date de publication de la demande: 23.10.2002
(73) Titulaire: MICHELIN AVS, 78000 Versailles (FR)
(72) Inventeur: GAUTHERON, Michel, F-58000 Nevers (FR)
(74) Mandataire: Weber-Bruls, Dorothée, Dr.
(86) Numéro de dépôt international: PCT/EP2001/000651
(87) Numéro de publication internationale: WO 2001/055615

(56) Documents cités:
- DE-A- 19 905 724
- PATENT ABSTRACTS OF JAPAN vol. 1996, no. 02, 29 février 1996 (1996-02-29) & JP 07 253132 A (TOKAI RUBBER IND LTD), 3 octobre 1995 (1995-10-03)
- PATENT ABSTRACTS OF JAPAN vol. 011, no. 348 (M-642), 14 novembre 1987 (1987-11-14) & JP 62 128741 A (HOKUSHIN IND INC), 11 juin 1987 (1987-06-11)

## Description

La présente invention concerne les dispositifs élastiques utilisés en particulier sur les véhicules automobiles et les procédés d'obtention de ces dispositifs.

Le rôle de ces dispositifs est généralement double. D'une part, ils permettent des degrés de liberté aux éléments rigides qu'ils relient. D'autre part, ils filtrent une part importante des vibrations ou des chocs transmis par la route ou le groupe propulseur du véhicule. D'une façon schématique, un tel dispositif est constitué d'armatures rigides reliées entre elles par au moins un élément déformable (généralement élastomérique). La rigidité de cet élément est lié au choix du matériau et à sa géométrie. L'homme du métier sait déjà adapter les rigidités axiales et radiales en jouant sur les dimensions et sur les mélanges employés. Afin, par exemple, d'augmenter la rigidité radiale par rapport à la rigidité axiale, il est connu d'introduire une bague intermédiaire rigide généralement métallique qui, sans modifier notablement le comportement lors d'une sollicitation axiale du dispositif augmente considérablement sa rigidité radiale. Les performances demandées par les constructeurs automobiles poussant toujours plus loin ce ratio des rigidités radiale/axiale, on a proposé d'introduire deux bagues intermédiaires et même d'avantage en fonction du ratio visé.

D'autre part, afin d'améliorer la longévité des dispositifs, il est connu de précontraindre le matériau élastomérique en compression radiale. Ceci est généralement réalisé, après vulcanisation de l'élastomère, par une déformation permanente imprimée soit à l'armature extérieure soit à l'armature intérieure. L'opération qui consiste à réduire le volume (intérieur) de l'armature extérieure est appelée " rétreint ". L'opération qui consiste à augmenter le volume (extérieur) de l'armature intérieure est appelée " dudgeonnage ". Suivant les dimensions des dispositifs, on applique une déformation permanente de l'ordre de 5 à 10% du diamètre.

Pour précontraindre sensiblement uniformément l'élastomère lorsque le dispositif comporte une bague intermédiaire rigide, on procède de façon connue à un rétreint de l'armature extérieure et à un dudgeonnage de l'armature intérieure.

Si par contre, le dispositif comporte plus d'une bague intermédiaire rigide, les zones de matériau élastomérique qui ne sont pas en contact avec l'une ou l'autre des armatures ne sont pas précontraintes. Il s'en suit une limitarion des performances du dispositif en matiére de contrainte admissible et/ou de durée de vie.

Du document JP-A-62-128741 il est connu un dispositif élastique conforme au préambule de la revendication 6 et un procédé conforme au préambule de la revendication 1. Ce dispositif est composé de deux articulations uniques. Chacune desdites deux articulations uniques est constituée elle-même d'armatures extérieures et intérieures, entre lesquelles un matériau élastomérique est interposé. Après avoir précontraint chacune desdites deux articulations, lesdites deux articulations sont emmanchées l'une dans l'autre pour établir l'articulation finale.

L'invention permet de lever cette limitation mentionnée ci-dessus. Le procédé de l'invention autorise en effet, la précontrainte du matériau élastomérique de l'articulation, indépendamment du nombre de bagues intermédiaires rigides qu'elle comprend.

L'invention consiste d'abord en un procédé d'application d'une précontrainte de compression radiale à un matériau élastomérique d'une articulation élastique, ladite articulation comprenant une armature rigide extérieure et une armature rigide intérieure, ladite articulation comprenant, en outre, au moins une bague intermédiaire rigide séparant ledit matériau élastomérique en au moins deux parties, ledit procédé consistant à déformer plastiquement l'une au moins desdites armatures rigides afin de générer une contrainte de compression radiale dans au moins une desdites parties dudit matériau élastomérique et à contrôler une déformation axiale de ladite au moins une desdites parties afin d'imposer une déformation radiale sensiblement uniforme à ladite bague intermédiaire rigide.

L'invention consiste également en un dispositif d'application d'une précontrainte de compression radiale à un matériau élastomérique d'une articulation élastique, ladite articulation élastique comprenant une armature rigide extérieure et une armature rigide intérieure, comprenant, en outre, au moins une bague intermédiaire rigide séparant ledit matériau en au moins deux parties, ledit dispositif comprenant des moyens aptes à déformer plastiquement radialement l'une au moins desdites armatures rigides et comprenant des butées aptes à contrôler une déformation axiale d'au moins une desdites parties dudit matériau élastomérique.

L'invention repose sur le principe de l'incompressibilité du matériau élastomérique. Lors de la déformation radiale du matériau élastomérique par rétreint ou dudgeonnage, on contrôle la déformation axiale proportionnelle (le coefficient de Poisson reliant les déformations normales). Le matériau élastomérique impose alors à la bague intermédiaire adjacente une déformation radiale de même nature que celle subie par l'articulation.

Le procédé de l'invention permet ainsi de transmettre radialement la déformation sans qu'elle soit arrêtée par la ou les bagues intermédiaires rigides. Ceci a un intérêt évident dans le cas des articulations ayant plus d'une bague intermédiaire mais également dans le cas d'articulations n'en comportant qu'une car cela permet, par exemple, de réaliser la précontrainte en une seule opération, soit de rétreint, soit de dudgeonnage.

La distribution de précontrainte dans les différentes zones du matériau élastomérique est fonction de la limite élastique de l'armature qui reçoit le rétreint ou le dudgeonnage, de la déformation axiale que l'on autorise au matériau élastomérique et de la limite élastique de la bague intermédiaire. On peut, en réduisant l'épaisseur de la bague ou en adoptant un matériau plus ductile (aluminium par exemple), faciliter le procédé en rendant plus faibles les pressions transmises (et donc subies) par le matériau élastomérique.

L'invention qui permet à la précontrainte de compression radiale de franchir une bague intermédiaire est reproductible en chaîne. Le procédé de l'invention permet en effet, en contrôlant les déformations axiales des zones de matériau élastomérique séparées par des bagues successives, de répartir la précontrainte en franchissant plusieurs bagues. Les pressions nécessaires sont alors plus élevées mais on peut ainsi réduire le nombre d'opérations.

La détermination des paramètres de contrôle peut se faire de façon expérimentale ou par le calcul. Les pressions de contrôle sont obtenus par exemple en exerçant un effort axial donné sur les extrémités des zones de matériau élastomérique ou en imposant une position axiale donnée à une butée qui peut être souple ou rigide.

L'objectif du procédé est de générer une précontrainte de compression radiale dont les caractéristiques sont, par ailleurs, connues de l'homme du métier qui, suivant les dimensions des articulations, cherche à appliquer une réduction permanente de l'ordre de 5 à 10% des dimensions radiales des parties du matériau élastomérique de l'articulation. Il appartient à l'homme du métier de déterminer précisément les paramètres de réglages du dispositif de l'invention pour appliquer le procédé de l'invention au cas d'espèce de chaque modèle d'articulation.

De façon expérimentale, une méthode connue de mesure de la précontrainte est la suivante : on découpe l'articulation en secteurs le long de ses rayons, on mesure les épaisseurs des différentes paries de matériau élastomérique dans cet état libéré de la précontrainte et on en déduit la valeur de la précontrainte par comparaison avec les épaisseurs initiales des différentes parties de matériau élastomérique de l'articulation (avant son découpage en secteurs).

L'invention sera mieux comprise par la description de quelques modes particuliers de réalisation à l'aide des figures suivantes :
Fig 1 : articulation comprenant deux armatures rigides intermédiaires,
Fig 2 : articulation de la figure 1 subissant un rétreint suivant un premier mode de réalisation de l'invention,
Fig 3 : articulation de la figure 1 subissant un dudgeonnage suivant un second mode de réalisation de l'invention,
Fig 4 : articulation de la figure 1 subissant un dudgeonnage suivant un troisième mode de réalisation de l'invention,

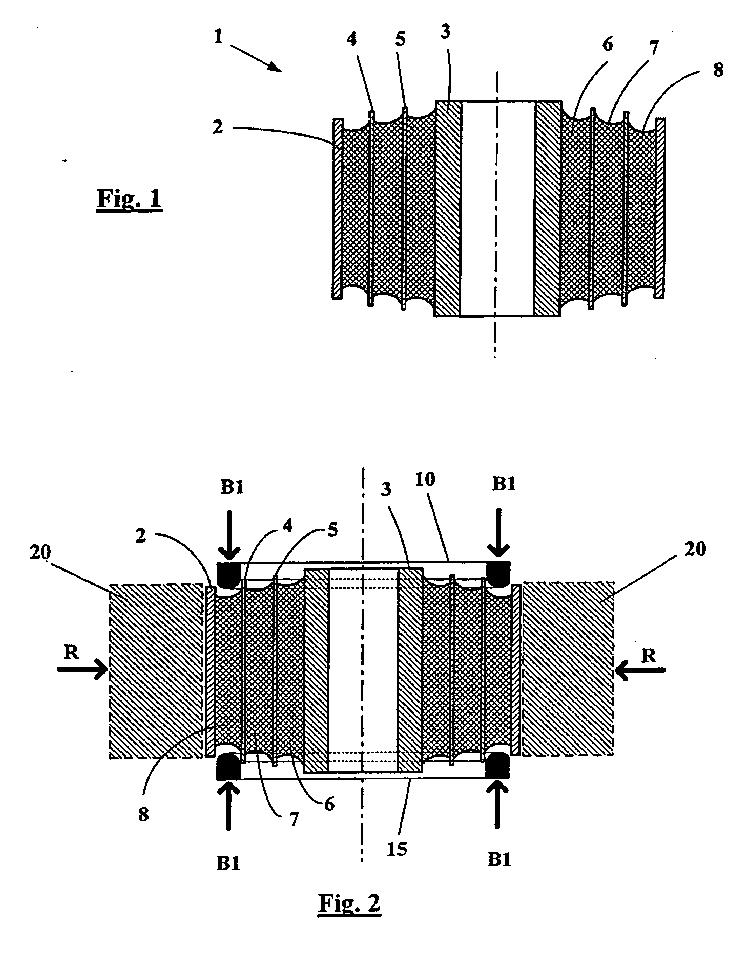

A la figure 1, on a représenté la coupe d'un exemple d'articulation (1) élastique. Elle comprend une armature extérieure (2) et une armature intérieure (3) généralement métalliques, sensiblement cylindriques. Ces armatures sont reliées entre elles par un matériau élastomérique adhérisé. Afin d'augmenter la raideur radiale par rapport à la raideur axiale de l'articulation, on introduit des bagues intermédiaires rigides (4,5) qui séparent le matériau élastomérique en trois parties (6, 7, 8) coaxiales. On voit qu'un rétreint permet normalement de précontraindre la partie radialement extérieure (8) du matériau. De même, un dudgeonnage permet de précontraindre la partie radialement intérieure (6) du matériau. Cependant, la partie intermédiaire (7) du matériau élastomérique est inaccessible à la précontrainte par les moyens connus de l'état de la technique car comprise entre deux bagues rigides (4, 5).

La figure 2 représente un mode de réalisation du procédé de l'invention. On procède au rétreint radial de l'armature extérieure (2) en exerçant une pression radiale (R). La déformation (expansion) axiale de la partie extérieure (8) du matériau élastomérique est contrôlée par une pression (B1) développée par des butées (10, 15). L'incompressibilité du matériau fait que la bague intermédiaire rigide extérieure (4) subit, comme l'armature extérieure (2), un rétreint. Ainsi, la partie intermédiaire (7) du matériau élastomérique se trouve également précontrainte. La partie intérieure (6) du matériau élastomérique peut être précontrainte par une opération (connue en soi) antérieure, simultanée ou ultérieure de dudgeonnage de l'armature intérieure (3).

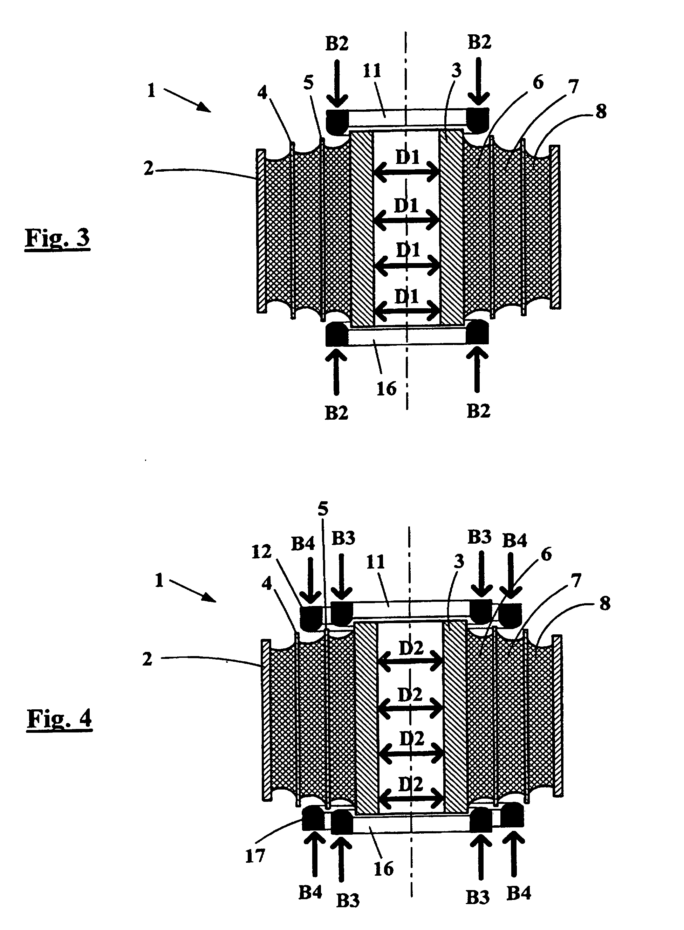

La figure 3 représente un second mode de réalisation du procédé de l'invention. On procède à l'expansion radiale de l'armature intérieure (3) par dudgeonnage (D1). La déformation (expansion) axiale de la partie intérieure (6) du matériau élastomérique est contrôlée par une pression (B2) développée par des butées (11, 16). L'incompressibilité du matériau fait que la bague intermédiaire intérieure rigide (5) subit, comme l'armature intérieure (3), une expansion radiale. Ainsi, la partie intermédiaire (7) du matériau élastomérique se trouve précontrainte. La partie extérieure (8) du matériau élastomérique peut être précontrainte par une opération (connue en soi) antérieure, simultanée ou ultérieure de rétreint de l'armature extérieure (2).

Les modes de réalisation des figures 2 et 3 permettent également, si l'articulation ne comprend qu'une bague intermédiaire (donc deux parties distinctes d'élastomère), d'imprimer une précontrainte au matériau élastomérique en une seule opération, soit de rétreint, soit de dudgeonnage alors que le procédé de l'art antérieur impose les deux opérations.

La figure 4 représente un troisième mode de réalisation du procédé de l'invention. On procède à l'expansion radiale de l'armature intérieure (3) par dudgeonnage (D2). La déformation (expansion) axiale de la partie intérieure (6) du matériau élastomérique est contrôlée par une pression (B3) développée par des butées (11, 16). L'incompressibilité du matériau fait que la bague intermédiaire intérieure (5) subit, comme l'armature intérieure (3), une expansion radiale. Ainsi, la partie intermédiaire (7) du matériau élastomérique subit une pression radiale. Sa déformation axiale étant, comme celle de la partie intérieure (6), contrôlée par une pression B4 développée par des butées (12, 17), la bague intermédiaire extérieure (4) subit, comme l'armature intérieure (3) et la bague intermédiaire intérieure (5), une expansion radiale qui vient précontraindre la partie extérieure (8) du matériau élastomérique. Ce mode de réalisation de l'invention permet de supprimer l'opération de rétreint de l'armature extérieure (2).

De manière analogue au mode de réalisation de la figure 4, on peut opérer, à l'inverse, un rétreint de l'armature extérieure (2) et contrôler les déformations axiales des parties extérieure (8) et intermédiaire (7) du matériau élastomérique pour imposer une compression radiale des bagues intermédiaires (4, 5).

On peut également combiner les effets du mode réalisation des figures 2 et 3. La précontrainte de la zone intermédiaire (7) du matériau élastomérique est alors la résultante des effets des deux procédés successifs ou simultanés.

Comme décrit plus haut, en réglant les pressions (B1, B2, B3, B4) appliquées par les butées (10, 11, 12, 15, 16, 17), on peut faire varier les contraintes transmises dans le but soit d'homogénéiser la précontrainte, soit au contraire de l'adapter à la situation de chaque partie (6, 7, 8) du matériau élastomérique dont les caractéristiques ou l'environnement peuvent différer.

Les butées (10, 11, 12, 15, 16, 17) sont réalisées de préférence dans un matériau souple, par exemple élastomérique, afin de pouvoir accompagner les déformations radiales durant le procédé. Elles peuvent être portées par des supports fixes ou mobiles. De préférence, le profil des butées (10, 11, 12, 15, 16, 17) est sensiblement complémentaire de celui des extrémités axiales des parties (6, 7, 8) du matériau élastomérique. Dans le cas de butées multiples (figure 4), les butées situées d'un même côté de l'articulation peuvent être portées par un support commun ou des supports séparés afin de permettre un réglage indépendant des pressions axiales (B3, B4).

On peut exprimer de façon générale la relation préférentielle entre le nombre de parties concentriques concernées par l'action des butées, le nombre de butées nécessaires au procédé et le nombre de parties d'élastomère affectées par la précontrainte de compression radiale en disant que le dispositif comporte un nombre de butées (10, 11, 12, 15, 16, 17) égal à 2n aptes à contrôler une déformation axiale d'un nombre de parties (6, 7, 8) égal à n afin de soumettre un nombre de parties (6, 7, 8) égal à n+1 à une précontrainte de compression radiale.

D'autres modes de réalisation de l'invention sont possibles. On peut, par exemple, réaliser le procédé en deux temps. On procède ainsi au rétreint (R) ou au dudgeonnage (D1, D2) de l'articulation puis on la soumet aux pressions axiales (B1, B2, B3, B4) ou vice-versa.

Ce qui a été représenté dans le cas d'une articulation cylindrique de section circulaire est valable pour d'autres géométries d'articulations. Il suffit d'adapter les moyens de contrôle de la déformation axiale de l'élastomère.

## Revendications

1. Procédé d'application d'une précontrainte de compression radiale à un matériau élastomérique d'une articulation élastique (1), ladite articulation (1) comprenant une armature rigide extérieure (2) et une armature rigide intérieure (3), ladite articulation (1) comprenant, en outre au moins une bague intermédiaire rigide (4, 5) séparant ledit matériau élastomérique en au moins deux parties (6, 7, 8), ledit procédé consistant à déformer plastiquement l'une au moins desdites armatures rigides (2, 3) afin de générer une contrainte de compression radiale dans au moins une desdites parties (6, 7, 8) dudit matériau élastomérique, **caractérisé en ce qu'**il consiste à contrôler une déformation axiale de ladite au moins une desdites parties (6, 7, 8) afin d'imposer une déformation radiale sensiblement uniforme à ladite bague intermédiaire rigide (4, 5).

2. Procédé selon la revendication 1, **caractérisé en ce qu'**il consiste à rétreindre radialement ladite armature extérieure (2) afin de générer une contrainte de compression radiale dans une partie adjacente (8) dudit matériau élastomérique et à contrôler ladite déformation axiale de ladite partie adjacent (8) afin d'imposer une déformation radiale sensiblement uniforme à ladite bague intermédiaire rigide (4) adjacente.

3. Procédé selon la revendication 1, **caractérisé en ce qu'**il consiste à élargir radialement ladite armature intérieure (3) afin de générer une contrainte de compression radiale dans une partie adjacente (6) dadit matériau élastomérique et à contrôler ladite déformation axiale de ladite partie adjacente (6) afin d'imposer une déformation radiale sensiblement uniforme à ladite bague intermédiaire rigide (5) adjacente.

4. Procédé selon l'une des revendications précédentes, **caractérisé en ce qu'**il consiste à déformer plastiquement l'une au moins desdites armatures rigides (2, 3) afin de générer une contrainte de compression radiale dans au moins deux adjacentes desdites parties (6, 7, 8) dudit matériau élastomérique en contrôlant des déformations axiales desdites au moins deux adjacentes desdites parties (6, 7, 8) afin d'imposer des déformations radiales sensiblement uniformes à au moins deux desdites bagues intermédiaires rigides (4, 5).

5. Procédé selon l'une des revendications précédentes, **caractérisé en ce que** ladite déformation axiale est contrôlée par des butées (10, 11, 12, 15, 16, 17).

6. Dispositif d'application d'une précontrainte de compression radiale à un matériau élastomérique d'une articulation élastique (1), ladite articulation élastique (1) comprenant une armature rigide extérieure (2) et une armature rigide intérieure (3), ladite articulation élastique (1) comprenant, en outre, au moins une bague intermédiaire rigide (4, 5) séparant ledit matériau en au moins deux parties (6, 7; 8), ledit dispositif comprenant des moyens aptes à déformer plastiquement radialement l'une au moins desdites armatures rigides (2, 3), caractérisé en des butées (10, 11, 12, 15, 16, 17) aptes à contrôler une déformation axiale d'au moins une desdites parties (6, 7, 8) dudit matériau élastomériqne.

7. Dispositif selon la revendication 6 **caractérisé en ce que** lesdites butées (10, 11, 12, 15, 16, 17) sont aptes à accompagner une déformation radiale de ladite articulation (1).

8. Dispositif selon la revendication 6 **caractérisé en ce que** le profil desdites butées (10, 11, 12, 15, 16, 17) est sensiblement complémentaire de celui d'extrémités axiales desdites parties (6, 7, 8) dudit matériau élastomérique.

9. Dispositif selon la revendication 6 **caractérisé en ce qu'**il comporte un nombre desdites butées (10, 11, 12, 15, 16, 17) égal à 2n aptes à contrôler une déformation axiale d'un nombre de dites parties (6, 7, 8) égal à n afin de soumettre un nombre de dites parties (6, 7, 8) égal à n+1 à une précontrainte de compression radiale.

## Patentansprüche

1. Verfahren zum Anlegen einer radialen kompressiven Vorspannung an ein elastomeres Material eines elastischen Gelenks (1), wobei das Gelenk (1) einen starren Aussenkörper (2) und einen starren Innenkörper (3) umfasst und wobei das Gelenk (1) ausserdem zumindest einen starren Zwischenring (4, 5) umfasst, der das elastomere Material in mindestens zwei Abschnitte (6, 7, 8) teilt, wobei das Verfahren darin besteht, zumindest einen der starren Körper (2, 3) plastisch zu verformen, um in zumindest einem der Abschnitte (6, 7, 8) des elastomeren Materials eine radiale Druckspannung zu erzeugen, **dadurch gekennzeichnet, dass** es darin besteht, eine axiale Verformung des zumindest einen der Abschnitte (6, 7, 8) so zu steuern, dass dem starren Zwischenring (4, 5) eine radiale, im Wesentlichen gleichförmige Verformung aufgezwungen wird.

2. Verfahren nach Anspruch 1, **dadurch gekennzeichnet, dass** es darin besteht, den Aussenkörper (2) radial zu reduzieren, um eine radiale Druckspannung in einem benachbarten Abschnitt (8) des elastomeren Materials zu erzeugen, und die axiale Verformung des benachbarten Abschnitts (8) so zu steuern, dass dem benachbarten starren Zwischenring (4) eine radiale, im Wesentlichen gleichförmige Verformung aufgezwungen wird.

3. Verfahren nach Anspruch 1, **dadurch gekennzeichnet, dass** es darin besteht, den Innenkörper (3) radial aufzuweiten, um eine radiale Druckspannung in einem benachbarten Abschnitt (6) des elastomeren Materials zu erzeugen, und die axiale Verformung des benachbarten Abschnitts (6) so zu steuern, dass dem benachbarten starren Zwischenring (5) eine radiale, Im Wesentlichen gleichförmige Verformung aufgezwungen wird.

4. Verfahren nach einem der vorangehenden Ansprüche, **dadurch gekennzeichnet, dass** es darin besteht, zumindest einen der starren Körper (2, 3) plastisch so zu verformen, dass eine radiale Druckspannung in mindestens zwei benachbarten Abschnitten (6, 7, 8) des elastomeren Materials erzeugt wird, indem die axialen Verformungen der mindestens zwei benachbarten Abschnitte (6, 7, 8) so gesteuert werden, dass zumindest zweien der starren Zwischenringe (4, 5) radiale, im Wesentlichen gleichförmige Verformungen aufgezwungen werden.

5. Verfahren nach einem der vorangehenden Ansprüche, **dadurch gekennzeichnet, dass** die axiale Verformung durch Anschläge (10, 11, 12, 15, 16, 17) gesteuert wird.

6. Vorrichtung zum Anlegen einer radialen kompressiven Vorspannung an ein elastomeres Material eines elastischen Gelenks (1), wobei das elastische Gelenk einen starren Aussenkörper (2) und einen starren Innenkörper (3) umfasst und wobei das elastische Gelenk (1) ausserdem zumindest einen starren Zwischenring (4, 5) umfasst, der das Material in mindestens zwei Abschnitte (6, 7, 8) teilt, wobei die Vorrichtung Mittel umfasst, die in der Lage sind, zumindest einen der starren Körper (2, 3) radial plastisch zu verformen, durch Anschläge (10, 11, 12, 15, 16, 17) gekennzeichnet, die in der Lage sind, eine axiale Verformung zumindest eines der Abschnitte (6, 7, 8) des elastomeren Materials zu steuern.

7. Vorrichtung nach Anspruch 6, **dadurch gekennzeichnet, dass** die Anschläge (10, 11, 12, 15, 16, 17) in der Lage sind, einer radialen Verformung des Gelenks (1) zu folgen.

8. Vorrichtung nach Anspruch 6, **dadurch gekennzeichnet, dass** das Profil der Anschläge (10, 11, 12, 15, 16, 17) im Wesentlichen zu dem der axialen Enden der Abschnitte (6, 7, 8) des elastomeren Materials komplementär ist.

9. Vorrichtung nach Anspruch 6, **dadurch gekennzeichnet, dass** sie eine Zahl 2*n* der Anschläge (10, 11, 12, 15, 16, 17) umfasst, die in der Lage sind, eine axiale Verformung einer Zahl *n* der Abschnitte (6, 7, 8) zu steuern, um eine Zahl *n* + 1 dieser Abschnitte (6, 7, 8) einer radialen kompressiven Vorspannung zu unterwerfen.

## Claims

1. A method of applying a radial compression prestress to an elastomeric material of an elastic articulation (1), said articulation (1) comprising a rigid outer frame (2) and a rigid inner frame (3), the said articulation (1) also comprising at least one rigid intermediate ring (4, 5) separating the said elastomeric material into at least two parts (6, 7, 8), said method comprising plastically deforming at least one of said rigid frames (2, 3) in order to generate a radial compression stress in at least one of the said parts (6, 7, 8) of the said elastomeric material, **characterised in that** it comprises controlling an axial deformation of the said at least one of the said parts (6, 7, 8) in order to impose a substantially uniform radial deformation on the said rigid intermediate ring (4, 5).

2. A method according to claim 1, **characterised in that** it comprises radially swaging out said outer frame (2) in order to generate a radial compression stress in an adjacent part (8) of said elastomeric material and controlling said axial deformation of said adjacent part (8) in order to impose a substantially uniform radial deformation on the said adjacent rigid intermediate ring (4).

3. A method according to claim 1, **characterised in that** it comprises radially enlarging the said inner frame (3) in order to generate a radial compression stress in an adjacent part (6) of said elastomeric material and controlling said axial deformation of the said adjacent part (6) in order to impose a substantially uniform radial deformation on the said adjacent rigid intermediate ring (5).

4. A method according to any one of the preceding claims, **characterised in that** it comprises plastically deforming one at least of the said rigid frames (2, 3) in order to generate a radial compression stress in at least two adjacent ones of the said parts (6, 7, 8) of the said elastic material by controlling axial deformations of the said at least two adjacent ones of the said parts (6, 7, 8) in order to impose substantially uniform radial deformations on at least two of the said rigid intermediate rings (4, 5).

5. A method according to any one of the preceding claims, **characterised in that** the said axial deformation is controlled by abutments (10, 11, 12, 15, 16, 17).

6. A system for applying a radial compression prestress to an elastomeric material of an elastic articulation (1), said elastic articulation (1) comprising an outer rigid frame (2) and an inner rigid frame (3), the said elastomeric articulation (1) also comprising at least one rigid intermediate ring (4, 5) separating the said material into at least two parts (6, 7, 8), the said system comprising means adapted to plastically deform radially one at least of the said rigid frames (2, 3), **characterised by** abutments (10, 11, 12, 15, 16, 17) adapted to control an axial deformation of at least one of the said parts (6, 7, 8) of the said elastomeric material.

7. A system according to claim 6, **characterised in that** the said abutments (10, 11, 12, 15, 16, 17,) are adapted to accompany a radial deformation of the said articulation (1).

8. A system according to claim 6, **characterised in that** the profile of the said abutments (10, 11, 12, 15, 16, 17) is substantially complementary to that of axial ends of the said parts (6, 7, 8) of the said elastomeric material.

9. A system according to claim 6, **characterised in that** it comprises a number of the said abutments (10, 11, 12, 15, 16, 17) equal to 2n adapted to control an axial deformation of a number of said parts (6, 7, 8) equal to n in order to subject a number of said parts (6, 7, 8) equal to n+1 to a radial compression prestressing.
